# EUROPEAN PATENT SPECIFICATION

(11) **EP 3 433 097 B1**
(45) Date of publication and mention of the grant of the patent: **05.05.2021**
(21) Application number: 17726340.7
(22) Date of filing: 24.03.2017
(51) Int. Cl.: B32B 7/12, B32B 21/13, B32B 27/42

(54) **METHOD OF MANUFACTURING A WOOD VENEER PRODUCT AND A WOOD VENEER PRODUCT THUS OBTAINED**
VERFAHREN ZUR HERSTELLUNG EINES HOLZFURNIERPRODUKTS UND DADURCH ERHALTENES HOLZFURNIERPRODUKT
PROCÉDÉ DE FABRICATION D'UN PRODUIT DE PLACAGE DE BOIS ET PRODUIT DE PLACAGE DE BOIS AINSI OBTENU

(30) Priority: 24.03.2016 FI 20165249
(43) Date of publication of application: 30.01.2019
(60) Divisional application: 21166116.0
(73) Proprietor: Metsäliitto Osuuskunta, 02100 Espoo (FI)
(72) Inventor: SOKKA, Kasperi, 44200 Suolahti (FI)
(74) Representative: Laine IP Oy
(86) International application number: PCT/FI2017/050209
(87) International publication number: WO 2017/162926

(56) References cited:
- WO-A1-2010/066944
- WO-A1-2015/169325
- GB-A- 1 317 763

## Description

The invention relates to a method for manufacturing a laminated wood-veneer product, in which method several layers of wood veneer are glued onto each other with the aid of a resin adhesive at a high temperature and pressure.

The invention also relates to a laminated wood-veneer product manufactured using the method.

It is previously known to manufacture laminated wood-veneer products by coating the wood veneers with resin, stacking the wood veneers on top of each other, and heating and pressing the wood veneers, so that the resin hardens and binds the veneers to each other. The resins most generally used are phenol-formaldehyde resin, urea-formaldehyde resin, and melamine-formaldehyde resin.

It is also known to improve the properties of laminated wood-veneer products, such as stability, fire resistance, and rot resistance properties, by impregnation. The wood veneer is then first treated with impregnation resin, which is absorbed into the wood veneer. After drying, the impregnated wood veneers are coated with resin adhesive and stacked on top of each other. Finally, the stack of veneer is pressed at a raised temperature to harden the resin adhesive.

Small molecule resin, such as small molecule phenol-formaldehyde resin, is often used as the impregnation resin, along with a fire-protection agent or rot-protection agent, which can be absorbed inside the wood veneer. The veneers are impregnated, for example, by using a soaking, pressure/vacuum, or other similar method.

However, one problem among others is that the separate impregnation and drying of the wood veneers before gluing and hot pressing is difficult and time consuming.

Attempts have been made to solve the problem by mixing two types of resin, a long-chain resin adhesive and a short-chain impregnation resin. However, so much absorption into the wood veneers then occurs that a glued joint meeting the quality requirements is often not achieved.

In the method disclosed in FI patent publication 121623, a resin, preferably melamine resin, is spread on both surfaces of the previously unimpregnated wood veneers, which lie opposite to each other when stacked. In GB patent publication 567878 B, a manufacturing method of a laminated wood-veneer product is disclosed, wherein veneer sheets are impregnated with a resin of low molar mass before they are glued together. US patent publication 2008020200 A1 discloses a method for manufacturing a laminated wood product, wherein wood-veneer sheets are glued with an impregnated paper backing sheet. In the method according to US patent publication 3649442 A, wood sheets are impregnated with impregnation resin, then the sheets are coated with resin adhesive, stacked on top of each other, and pressed to a product at an increased pressure.

In US patent publication 4207379 A, a wood product is coated with a paper sheet impregnated with resins of low molar mass. In publication US 3470134 A, melamine-formaldehyde resin is manufactured for use in impregnation of paper sheet or veneer sheets of plywood. However, in these publications a laminated veneer product, wherein veneer sheets are joined together using resin adhesive, is not manufactured.

The present invention is intended to solve the problems of the prior art and create a manufacturing method for laminated wood-veneer products, by means of which durable laminated wood-veneer products with improved properties are produced, but by means of which difficult work stages are avoided.

Particularly the intention is to create a method, which produces both a good glued joint and the absorption of the impregnation resin into the veneer, in such a way as to improve the properties of the veneers, such as rot resistance, insect resistance, fire resistance, and strength.

In one embodiment, the method according to the invention is based on bringing the impregnation resin between the wood-veneer layers, so that some of the impregnation resin is absorbed in the veneers during the hot pressing. The impregnation resin can then be brought, for example, on top of a sheet or plate-like carrier, absorbed in a plate-like sheet (impregnated paper).

In a second embodiment, liquid impregnation resin is first absorbed in the wood veneers, so that essentially dry resin adhesive can be brought between the undried wood veneers and the wood-veneer layers glued to each other with the aid of the resin adhesive at an increased temperature and pressure.

In the method according to the invention for manufacturing a laminated wood-veneer product, at least some of the wood-veneer layers are impregnated with impregnation resin before the wood-veneer layers are glued to each other to form a laminated wood-veneer product, which can take place, for example, during the pressing of the sheet, particularly during hot pressing.

More specifically, the method according to the invention is principally characterized by what is stated in the characterizing portion of Claim 1.

For its part, the wood-veneer product according to the invention is characterized by what is stated in the characterizing portion of Claim 16 and the use according to the invention by what is stated in Claims 17 and 18.

Preferred embodiments are defined in the dependent claims. Considerable advantages are achieved by means of the invention. Thus, by absorbing impregnation resin into wood veneers using the method according to the invention, it is possible surprisingly to achieve both a good glued joint and the absorption of the resin into the veneers to improve the properties of the laminated veneer product.

In the following detailed description, preferred embodiments are examined more closely, with reference to the accompanying drawings.
Figure 1 shows a side view of a cross-section of a wood-veneer sheet according to a first embodiment and
Figure 2 shows a side view of a cross-section of a wood-veneer sheet according to a second embodiment.

In the present context, the term "wood-veneer product" refers to a product, for example, a laminated board, plywood, or wood board, formed of wood veneers comprising a wood material or wood-fibre-based material. The wood material is typically coniferous or deciduous wood, such as birch, aspen, pine, spruce, or some other suitable tree species, preferably birch.

In the present context, the term "resin adhesive" refers to any, as such known, adhesive or mixture substantially containing it, which may also contain a hardener. Typical adhesives are thermosetting resins, of which phenol resins can be separately referred to as examples. These are typically formed of the reaction products of phenol, *o-, m*-, and p-cresol, p-t-butyl-phenol, p-octyl-phenol, *p*-nonyl-phenol, *p*-phenyl-phenol, bisphenol A, and/or resorcinol with formaldehyde, acetaldehyde, paraldehyde, glyoxal, and/or furfural. Other resins that can be referred to include melamine-formaldehyde (mf), urea-formaldehyde (uf), polyurethane (pu), methylene-diphenylene-diisocyanate (mdi), polymeric methylene-diphenylene-diisocyanate (pmdi), edmi or edfi, and mixtures of these. Emulsion-polymer isocyanate dispersions and polyurethane-hotmelt adhesives are also possible.

An especially preferred resin is phenol-formaldehyde resin.

In the present context, the term "impregnation resin" refers to a resin, the molar mass of which is less than the molar mass of the resin adhesive, so that the impregnation resin is absorbed at least partly in the fibres of the wood veneers of the wood-veneer layers.

In one preferred embodiment, the same basic type of resin, which is used in the adhesive resin, but which has a smaller molar mass than the corresponding polymer of the adhesive resin, is used as the impregnation resin. This being the case, an impregnation resin consisting of phenol resin or particularly phenol-formaldehyde resin is used with the adhesive resin consisting of phenol resin or particularly phenol-formaldehyde resin, and correspondingly an impregnation resin consisting of melamine-formaldehyde resin is used as the impregnation resin with an adhesive resin consisting of melamine-formaldehyde resin.

Generally the molar mass (weight-centred molar mass) is at least 20 %, most suitably at least 40 %, particularly at least 60 %, possibly at least 90 % smaller than the molar mass of the adhesive resin.

The molar mass varies according to the type of resin and for an adhesive resin it is typically about 500 - 15.000 g/mol.

Bisphenol-F epoxy resin can be given as a particular example of an impregnation resin.

Generally the impregnation resin has a relatively low viscosity (500-3.000 m Pa), and it is used in a solvent-free form or with large solids contents.

In the present connection, the term "single pressing" refers to a method, in which all the desired component layers, i.e. material layers and adhesive layers, are stacked at one time to form a blank and the sheet is formed in a single pressing stage.

As stated above, the present technology relates to a method for manufacturing a laminated wood-veneer product, in which the wood-veneer layers are glued to each other at a high temperature and pressure, in such a way that at least some of the wood-veneer layers are impregnated with impregnation resin.

The sheet structure according to the invention can, in its totality, be manufactured using a single pressing. It is also possible to manufacture a separate body layer and outer layer with intermediate layers, which after this are joined together, for example, by stacking them to form a blank and pressing them together.

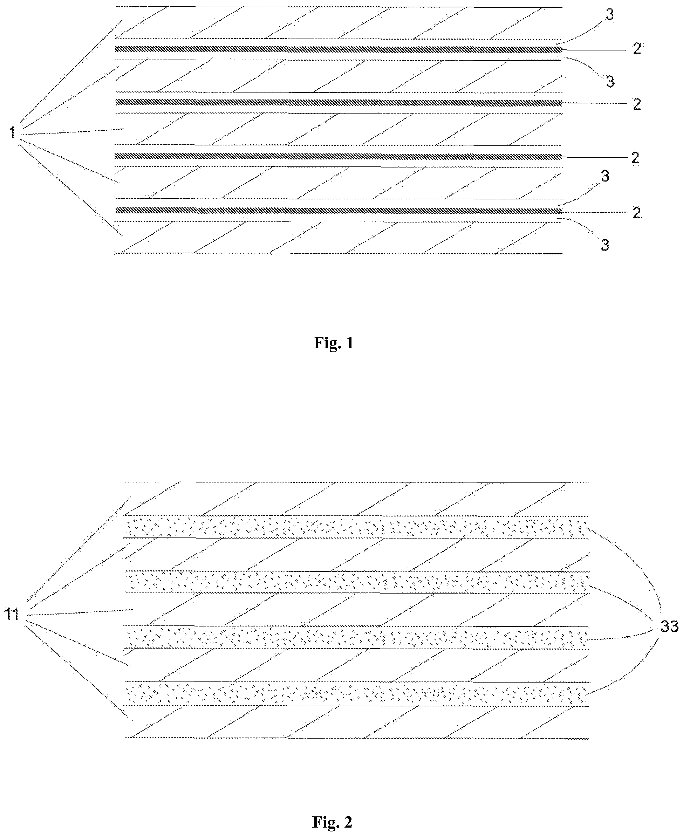

Figures 1 and 2 show two alternative laminated wood-veneer products.

The laminated wood-veneer product of Figure 1 includes several layers of wood-based veneer 1. Placed between the veneer layers are carrier layers 2, with the aid of which impregnation resin is brought between the wood-veneer layers. All the layers are joined to each other by adhesive-resin layers 3.

In the laminated wood-veneer product of Figure 2, the liquid impregnation resin is absorbed in the wood veneers 11, and an essentially dry adhesive resin 33, which in hot pressing joins the layers to each other, is brought between the wood veneers.

In both cases, coniferous or deciduous wood veneer is typically used as the wood-based veneer layers. And any of the resins listed above are used as the adhesive and correspondingly the impregnation resins.

The thicknesses of the individual veneers can vary, so that in one embodiment at least some of the veneers are thicker or thinner than the rest of the veneers. In another embodiment all the veneers of the present wood-based product are of the same thickness.

Generally the thickness of the veneers is in the range of 0.1-10 mm. Typically, the thickness of the veneer is about 0.4-5 mm, particularly about 0.5-4 mm, most suitably about 0.7-3.8 mm, and usually 1.0-3.0 mm, e.g. 1.3-2.0 mm.

In one embodiment, 0.1-100 parts by weight, particularly 1-75 parts by weight, of the impregnation resin relative to the adhesive resin's 100 parts by weight is absorbed in the wood-veneer layers.

In a particularly preferred embodiment, the impregnation resin is brought between the wood-veneer layers with the aid of a layered carrier, particularly a sheet or plate-like carrier. Typically paper or board sheets, a paper or board web, dry paper, fabric, felt, non-woven fabric, or a polymer film or sheet are used as the layered carrier.

When the impregnation resin is brought between the wood-veneer layers on top of the carrier, the amount of impregnation resin is about 10-500 parts by weight, particularly 20-350 parts by weight, relative to the carrier's 100 parts by weight. Preferably the impregnation resin is brought between the wood-veneer layers with the aid of the carrier at least mainly touch dry, and even more preferably, pre-hardened.

When the layered carrier containing impregnation resin has been brought between the wood veneers, the impregnation resin on the carrier mixes with the adhesive resin used for gluing the veneers due to the effect of pressure and temperature in the pressing stage, so that at least some of the impregnation resin mixes with the veneers. This achieves not only a good glued joint, but also the absorption in the veneers of the effective agents along with the impregnation resin.

It is also possible to absorb liquid impregnation resin in the wood veneers, stack the undried wood veneers containing the impregnation resin on top of each other, bring essentially dry adhesive resin or powdered resin between the wood veneers, and glue the wood-veneer layers to each other, with the aid of the adhesive resin, at an increased temperature and pressure, in order to form a laminated wood-veneer product. Due to the effect of the pressure and temperature in the pressing stage, the adhesive resin mixes with the impregnation resin used to impregnate the veneers, when at least some of the adhesive resin is absorbed by the veneers and glues together the wood-veneer product.

Effective agents, especially effective agents that alter the chemical, mechanical, or microbiological properties of the veneers, such as their rot resistance, insect resistance, fire resistance, or deflection, impact, compressive and/or tensile strength, can be brought between the veneer layers along with the impregnation resin. The amount of effective agent is preferably about 0.1-35 parts by weight to 100 parts by weight of the resin.

Examples of wood preservatives are as such known organic or inorganic biocides or similar agents with a wood-preserving effect, as well as mixtures of two or more biocides or preservative agents.

Examples of biocides are IPBC (3-iodo 2-propynyl butyl carbamate), propiconazole, tebuconazole, and cypermethrin, and mixtures of these. Alternatively, the wood preservative can be some non-biocide, such as tall oil and its derivatives, or tall-oil pitch and its raffinates and derivatives.

Fire retardant is typically a salt of some acid. Examples include salts of formic acid, citric acid, phosphoric acid, phosphonic acid, or boric acid.

It should be noted as well that impregnation resin itself acts at least partly as an effective agent particularly as a wood preservative, because it fills the pores in wood veneer and thus prevents water from penetrating the pores.

It is also possible to activate the veneer surfaces to be glued, for example, by corona or plasma treatment or chemically to further increase the success of the glued joint. An example of chemical activation treatment is treatment with an alkali, such as an alkalimetal or alkali-earth hydroxide or carbonate, such as sodium hydroxide.

As stated above, phenol-formaldehyde resin, which can contain a hardener, can be used as the adhesive resin. A typical hardener is an alkaline substance, such as an alkali metal or alkaline earth metal hydroxide or carbonate.

The impregnation resin too can contain a hardener. In the case of epoxy resins nitrogenous hardeners, such as aliphatic or aromatic amines, for example, can be used.

In the case of both the adhesive and impregnation resins, hardeners, which act at room temperature or a high temperature of, for example, more than 100 °C, can be used. It is also possible to use at least mixtures, which contain hardeners that act at two different temperatures, when the adhesive and/or impregnation resin is pre-hardened by the effect of a low-temperature hardener and the final hardening takes place by the effect of a high temperature hardener. In such a hardener mixture, the low-temperature hardener content is chosen in such a way that in the pre-hardening at most 50 %, especially at most 25 % of the ultimate bending strength is achieved.

If the adhesive resin does not contain a hardener, hardening can be achieved in the pressing stage, for example, by extending the time or raising the temperature.

The method described above can contain other stages in addition to the aforementioned stages. Thus after the spreading of the resin, the impregnated and/or glued veneers can be allowed to stand without pressure. After stacking and before hot pressing the veneers are preferably pre-pressed, preferably for 5-40 minutes at a temperature of 10-40°C and a pressure of 0.1-1.0 MPa. The hot pressing of the wood veneers stacked on top of each other is performed preferably for at least 5 minutes and, according to thickness, for up to 120 minutes and at a temperature of 100-160°C, when the pressure is typically 1-3 MPa. The pressing pressure can, however, be raised higher than this (e.g. to the range >3 MPa-10 MPa), if it is wished to increase density. Finally, the sheets can be trimmed, sanded, and sorted.

The laminated wood-veneer product manufactured according to the invention can be used, for example, as a transportation or building board, as a fire-retardant board, as a transportation base, or as casting shuttering or a glued laminated product. The laminated wood-veneer product manufactured according to the invention is particularly suitable for applications, in which moisture, rot, insect, or fire resistance is required in the wood-veneer product.

### Reference publications

### Patent publications

FI-121623
GB 567878 B
US 2008020200 A1
US 3649442 A
US 4207379 A
US 3470134 A

## Claims

1. A method for manufacturing a laminated wood-veneer product, in which method
- several wood-veneer layers are stacked on top of each other and
- the wood-veneer layers are glued onto each other with the aid of an adhesive resin at an increased pressure in order to form the laminated wood-veneer product,
**characterized in that**
- at least some of the wood-veneer layers are impregnated with an impregnation resin before the wood-veneer layers are glued onto each other,
wherein either
- the impregnation resin is brought between the wood-veneer layers on top of a carrier, especially a sheet or plate-like carrier;
or
- the wood veneers are impregnated with liquid impregnation resin, the undried wood veneers containing impregnation resin are stacked on top of each other, essentially dry adhesive resin is brought between the wood veneers, and the wood-veneer layers are glued to each other with the aid of the adhesive resin at an increased temperature and pressure, in order to form a laminated wood-veneer product.

2. The method according to claim 1, **characterized in that** the wood-veneer layers are impregnated with an impregnation resin, the molar mass of which is less than the molar mass of the adhesive resin, so that the impregnation resin is absorbed at least partly in the fibres of the wood veneers of the wood-veneer layers.

3. The method according to claim 1 or 2, **characterized in that** 0.1-100 parts by weight, especially 1-75 parts by weight, of the impregnation resin relative to 100 parts by weight of the adhesive resin is absorbed in the wood-veneer layers.

4. The method according to any one of the above claims, **characterized in that** a paper or board sheet, a paper or board web, dry paper, fabric, felt, non-woven fabric, or a polymer film or sheet is used as a layered carrier.

5. The method according to any one of the above claims, **characterized in that** the amount of impregnation resin is about 10-500 parts by weight, especially 20-350 parts by weight, relative to 100 parts by weight of the carrier.

6. The method according to any one of the above claims, **characterized in that** the impregnation resin is brought at least principally touch dry between the wood-veneer layers.

7. The method according to claim 6, **characterized in that** the impregnation resin is brought pre-hardened.

8. The method according to any one of the above claims, **characterized in that** due to the effect of the pressing-stage pressure and temperature the impregnation resin on the carrier mixes with the adhesive resin used to glue the veneers, so that at least some of the impregnation resin is absorbed in the veneers.

9. The method according to any one of the above claims, **characterized in that** due to the effect of the pressing-stage pressure and temperature the adhesive resin mixes with the impregnation resin used to impregnate the veneers, so that at least some of the adhesive resin is absorbed in the veneers and causes the wood-veneer product to be glued together.

10. The method according to anyone of the above claims, **characterized in that,** along with the impregnation resin, an effective agent is brought between the veneer layers, particularly an effective agent that changes the veneers' chemical, mechanical, or microbiological properties, such as their rot resistance, insect resistance, fire resistance, or deflection, impact, compressive, and/or tensile strength.

11. The method according to claim 10, **characterized in that** there is about 0.1-35 parts by weight of the effective agent to the impregnation resin's 100 parts by weight.

12. The method according to any one of the above claims, **characterized in that** an adhesive resin or adhesive mixture, such as phenol-formaldehyde resin or melamine-formaldehyde resin, which may contain a hardener, is used to glue the veneers.

13. The method according to any one of the above claims, **characterized in that** the impregnation resin is phenol-formaldehyde resin or melamine-formaldehyde resin, the molar mass of which is about 500-15,000 g/mol and which may contain a hardener.

14. The method according to any one of the above claims, **characterized in that** the veneer surface of the finished laminated wood-veneer product is activated by, for example, corona or plasma treatment or chemically.

15. The method according to any one of the above claims, **characterized in that** the manufacture of the laminated wood-veneer product takes place by hot pressing, especially single pressing, when pressing is performed at a temperature of 100-160°C and a pressure of 1-10 MPa.

16. A laminated wood-veneer product manufactured according to any one of the above claims.

17. Use of the method according to any one of claims 1-15 or correspondingly use of the product according to claim 16, as a transportation or building board, a fire-protection board, a transportation base, or as casting shuttering.

18. Use according to claim 17 in an application, in which moisture, rot, insect, or fire resistance is required of the wood-veneer product.

## Patentansprüche

1. Verfahren zur Herstellung eines laminierten Holzfurnierprodukts, wobei in dem Verfahren
- mehrere Holzfurnierschichten aufeinandergestapelt werden und
- die Holzfurnierschichten mithilfe eines Klebeharzes bei einem erhöhten Druck aneinandergeklebt werden, um das laminierte Holzfurnierprodukt zu bilden,
**dadurch gekennzeichnet, dass**
- mindestens einige der Holzfurnierschichten mit einem Imprägnierungsharz imprägniert werden, bevor die Holzfurnierschichten aneinandergeklebt werden,
wobei entweder
- das Imprägnierungsharz auf einer Oberseite eines Trägers, insbesondere eines Bogens oder plattenartigen Trägers, zwischen die Holzfurnierschichten eingebracht wird;
oder
- die Holzfurniere mit flüssigem Imprägnierungsharz imprägniert werden, die nicht getrockneten Holzfurniere, die Imprägnierungsharz enthalten, aufeinandergestapelt werden, im Wesentlichen trockenes Klebeharz zwischen die Holzfurniere eingebracht wird und die Holzfurnierschichten mithilfe des Klebeharzes bei einer erhöhten Temperatur und Druck aneinandergeklebt werden, um ein laminiertes Holzfurnierprodukt zu bilden.

2. Verfahren nach Anspruch 1, **dadurch gekennzeichnet, dass** die Holzfurnierschichten mit einem Imprägnierungsharz imprägniert werden, dessen Molmasse geringer ist als die Molmasse des Klebeharzes, sodass das Imprägnierungsharz mindestens teilweise durch die Fasern der Holzfurniere der Holzfurnierschichten absorbiert wird.

3. Verfahren nach Anspruch 1 oder 2, **dadurch gekennzeichnet, dass** 0,1-100 Gewichtsteile, insbesondere 1- 75 Gewichtsteile, des Imprägnierungsharzes bezogen auf 100 Gewichtsteile des Klebeharzes durch die Holzfurnierschichten absorbiert werden.

4. Verfahren nach einem der vorstehenden Ansprüche, **dadurch gekennzeichnet, dass** ein Paper- oder Pappenbogen, eine Papier- oder Pappenbahn, trockenes Papier, Stoff, Filz, Vliesstoff oder ein Polymerfilm oder -bogen als ein geschichteter Träger verwendet wird.

5. Verfahren nach einem der vorstehenden Ansprüche, **dadurch gekennzeichnet, dass** die Menge an Imprägnierungsharz etwa 10-500 Gewichtsteile, insbesondere 20 - 350 Gewichtsteile, bezogen auf 100 Gewichtsteile des Trägers beträgt.

6. Verfahren nach einem der vorstehenden Ansprüche, **dadurch gekennzeichnet, dass** das Imprägnierungsharz mindestens im Wesentlichen berührungstrocken zwischen die Holzfurnierschichten eingebracht wird.

7. Verfahren nach Anspruch 6, **dadurch gekennzeichnet, dass** das Imprägnierungsharz vorgehärtet eingebracht wird.

8. Verfahren nach einem der vorstehenden Ansprüche, **dadurch gekennzeichnet, dass** aufgrund der Druck- und Temperaturwirkung des Pressvorgangs das Imprägnierungsharz auf dem Träger sich mit dem Klebeharz mischt, das verwendet wird, um die Furniere zu kleben, sodass mindestens einiges von dem Imprägnierungsharz durch die Furniere absorbiert wird.

9. Verfahren nach einem der vorstehenden Ansprüche, **dadurch gekennzeichnet, dass** aufgrund der Druck- und Temperaturwirkung des Pressvorgangs das Klebeharz sich mit dem Imprägnierungsharz mischt, das verwendet wird, um die Furniere zu imprägnieren, sodass mindestens einiges von dem Klebeharz durch die Furniere absorbiert wird und verursacht, dass das Holzfurnierprodukt zusammengeklebt wird.

10. Verfahren nach einem der vorstehenden Ansprüche, **dadurch gekennzeichnet, dass** ein wirksames Mittel zusammen mit dem Imprägnierungsharz zwischen die Furnierschichten eingebracht wird, insbesondere ein wirksames Mittel, dass die chemischen, mechanischen oder mikrobiologischen Eigenschaften der Furniere verändert, wie ihre Fäulnisbeständigkeit, Insektenbeständigkeit, Feuerbeständigkeit oder Durchbiegungs-, Schlag-, Druck- und/oder Zugfestigkeit.

11. Verfahren nach Anspruch 10, **dadurch gekennzeichnet, dass** etwa 0,1 - 35 Gewichtsteile des wirksamen Mittels zu 100 Gewichtsteilen des Imprägnierungsharzes vorliegen.

12. Verfahren nach einem der vorstehenden Ansprüche, **dadurch gekennzeichnet, dass** ein Klebeharz oder Klebegemisch, wie Phenol-Formaldehydharz oder Melamin-Formaldehydharz, das einen Härter enthalten kann, verwendet wird, um die Furniere zu kleben.

13. Verfahren nach einem der vorstehenden Ansprüche, **dadurch gekennzeichnet, dass** das Imprägnierungsharz Phenol-Formaldehydharz oder Melamin-Formaldehydharz ist, dessen Molmasse etwa 500- 15 000 g/mol beträgt und das einen Härter enthalten kann.

14. Verfahren nach einem der vorstehenden Ansprüche, **dadurch gekennzeichnet, dass** die Furnieroberfläche des fertigen laminierten Holzfurnierprodukts beispielsweise durch Korona- oder Plasmabehandlung oder chemisch aktiviert wird.

15. Verfahren nach einem der vorstehenden Ansprüche, **dadurch gekennzeichnet, dass** die Herstellung des laminierten Holzfurnierprodukts durch Heißpressen, insbesondere Einzelpressen, stattfindet, wenn Pressen bei einer Temperatur von 100 - 160 °C und einem Druck von 1-10 MPa durchgeführt wird.

16. Laminiertes Holzfurnierprodukt, das nach einem der vorstehenden Ansprüche hergestellt wird.

17. Verwendung des Verfahrens nach einem der Ansprüche 1-15 oder entsprechend Verwendung des Produkts nach Anspruch 16, als eine Beförderungs- oder Bauplatte, eine Feuerschutzplatte, eine Beförderungsbasis, oder als Gussverschalung.

18. Verwendung nach Anspruch 17 in einer Anwendung, bei der von dem Holzfurnierprodukt Feuchtigkeits-, Fäulnis-, Insekten- oder Feuerbeständigkeit erfordert wird.

## Revendications

1. Procédé de fabrication d'un produit de placage de bois stratifié, dans lequel procédé
- plusieurs couches de placage de bois sont empilées sur le dessus les unes des autres et
- les couches de placage de bois sont collées les unes aux autres à l'aide d'une résine adhésive à une pression augmentée afin de former le produit de placage de bois stratifié,
**caractérisé en ce que**
- au moins certaines des couches de placage de bois sont imprégnées avec une résine d'imprégnation avant que les couches de placage de bois ne soient collées les unes aux autres,
dans lequel
- la résine d'imprégnation est amenée entre les couches de placage de bois sur le dessus d'un support, spécialement une feuille ou un support à plaque ;
ou
- les placages de bois sont imprégnés avec une résine d'imprégnation liquide, les placages de bois non séchés contenant une résine d'imprégnation sont empilés sur le dessus les uns des autres, une résine adhésive essentiellement sèche est amenée entre les placages de bois, et les couches de placage de bois sont collées les unes aux autres à l'aide de la résine adhésive à une température et une pression augmentées afin de former un produit de placage de bois stratifié.

2. Procédé selon la revendication 1, **caractérisé en ce que** les couches de placage de bois sont imprégnées avec une résine d'imprégnation, dont la masse molaire est inférieure à la masse molaire de la résine adhésive de sorte que la résine d'imprégnation soit absorbée au moins partiellement dans les fibres des placages de bois des couches de placage de bois.

3. Procédé selon la revendication 1 ou 2, **caractérisé en ce que** 0,1 à 100 parties par poids, spécialement 1 à 75 parties par poids, de la résine d'imprégnation par rapport aux 100 parties par poids de la résine adhésive sont absorbées dans les couches de placage de bois.

4. Procédé selon l'une quelconque des revendications précédentes, **caractérisé en ce qu'**une feuille de papier ou de carton, une bande de papier ou de carton, du papier sec, du tissu, du feutre, du non tissé, ou un film ou une feuille de polymère est utilisé comme support à couches.

5. Procédé selon l'une quelconque des revendications précédentes, **caractérisé en ce que** la quantité de résine d'imprégnation est d'environ 10 à 500 parties par poids, spécialement 20 à 350 parties par poids, par rapport aux 100 parties par poids du support.

6. Procédé selon l'une quelconque des revendications précédentes, **caractérisé en ce que** la résine d'imprégnation est amenée au moins principalement avec un toucher sec entre les couches de placage de bois.

7. Procédé selon la revendication 6, **caractérisé en ce que** la résine d'imprégnation est amenée prédurcie.

8. Procédé selon l'une quelconque des revendications précédentes, **caractérisé en ce qu'**en raison de l'effet de la pression et de la température de l'étape de pressage la résine d'imprégnation sur le support se mélange avec la résine adhésive utilisée pour coller les placages de sorte qu'au moins un peu de la résine d'imprégnation soit absorbé dans les placages.

9. Procédé selon l'une quelconque des revendications précédentes, **caractérisé en ce qu'**en raison de l'effet de la pression et de la température de l'étape de pressage la résine adhésive se mélange avec la résine d'imprégnation utilisée pour imprégner les placages de sorte qu'au moins un peu de la résine adhésive soit absorbé dans les placages et amène le produit de placage de bois à être collé ensemble.

10. Procédé selon l'une quelconque des revendications précédentes, **caractérisé en ce qu'**avec la résine d'imprégnation, un agent effectif est amené entre les couches de placage, particulièrement un agent effectif qui change les propriétés chimiques, mécaniques ou microbiologiques de placage, telles que leur résistance au pourrissement, résistance aux insectes, résistance au feu, ou déflexion, impact, résistance à la compression et/ou traction.

11. Procédé selon la revendication 10, **caractérisé en ce qu'**il y a environ 0,1 à 35 parties en poids de l'agent effectif sur les 100 parties en poids de résine d'imprégnation.

12. Procédé selon l'une quelconque des revendications précédentes, **caractérisé en ce qu'**une résine adhésive ou un mélange d'adhésif tel que de la résine de phénol-formaldéhyde ou résine de mélamine-formaldéhyde qui peut contenir un durcisseur, est utilisé pour coller les placages.

13. Procédé selon l'une quelconque des revendications précédentes, **caractérisé en ce que** la résine d'imprégnation est une résine de phénol-formaldéhyde ou résine de mélamine-formaldéhyde, dont la masse molaire est d'environ 500 à 15 000 g/mole et qui peut contenir un durcisseur.

14. Procédé selon l'une quelconque des revendications précédentes, **caractérisé en ce que** la surface de placage du produit de placage de bois stratifié fini est activée, par exemple, par traitement corona ou plasma ou chimiquement.

15. Procédé selon l'une quelconque des revendications précédentes, **caractérisé en ce que** la fabrication du produit de placage de bois stratifié se déroule par pressage à chaud, spécialement pressage seul lorsque le pressage est réalisé à une température de 100 à 160 °C et à une pression de 1 à 10 MPa.

16. Produit de placage de bois stratifié fabriqué selon l'une quelconque des revendications précédentes.

17. Utilisation du procédé selon l'une quelconque des revendications 1 à 15 ou utilisation correspondante du produit selon la revendication 16, comme un panneau de transport ou de construction, un panneau de protection contre le feu, une base de transport, ou comme coffrage coulé.

18. Utilisation selon la revendication 17 dans une application, dans laquelle une résistance à l'humidité, au pourrissage, aux insectes ou au feu est exigée du produit de placage de bois.
